**Europäisches Patentamt**

**European Patent Office**

**Office européen des brevets**

(19)

(11) Veröffentlichungsnummer: **0 052 184**
**A2**

(12) # EUROPÄISCHE PATENTANMELDUNG

(21) Anmeldenummer: **81106381.7**

(22) Anmeldetag: **17.08.81**

(51) Int. Cl.³: **H 04 N 1/46**

(30) Priorität: **14.11.80 DE 3042919**

(43) Veröffentlichungstag der Anmeldung:
**26.05.82 Patentblatt 82/21**

(84) Benannte Vertragsstaaten:
**AT BE CH FR GB IT LI NL SE**

(71) Anmelder: **DR.-ING. RUDOLF HELL GmbH**
**Grenzstrasse 1-5**
**D-2300 Kiel 14(DE)**

(72) Erfinder: **Brand, Gerd, Dr.**
**Pappelweg 3b**
**D-3304 Didderse(DE)**

(72) Erfinder: **Niemeier, Hubert, Dr.**
**Wakenitzstrasse 4**
**D-2301 Raisdorf(DE)**

(54) Verfahren und Einrichtung zur Übertragung von Farbbildern in der Faksimiletechnik.

(57) Verfahren zum Übertragen von Farbbildern in der Faksimiletechnik, wobei das Farboriginal mittels eines optischelektrischen Abtasters über Farbfilter trichromatisch abgetastet wird und Farbwertsignalwerte R, G, B gewonnen werden. Aus den Farbwertsignalen R, G, B werden ein Luminanzsignal gemäß der Formel $Y = a_1 R + a_2 G + a_3 B$ und zwei Farbdifferenzsignale R-Y und B-Y gebildet, die Farbdifferenzsignale R-Y und B-Y komprimiert, und die komprimierten Farbdifferenzsignale R-Y, B-Y und das Luminanzsignal derart zeitlich verschachtelt übertragen, daß die Farbdifferenzsignale in der Totzeit des Abtasters übertragen werden. Am Empfangsort nach der Dekompression und der Multiplexierung wird das Farbbild wieder aufgezeichnet.

./...

EP 0 052 184 A2

Croydon Printing Company Ltd.

Fig. 1

Dr.-Ing. Rudolf Hell GmbH          Kiel, den 11. November 1980
Grenzstraße 1-5                    Lf/Uck
2300 Kiel 14


Patentanmeldung Nr. 80/550
Kennwort: "Farbfax"


## Verfahren und Einrichtung zur Übertragung von Farbbildern in der Faksimiletechnik

Die vorliegende Erfindung betrifft ein Verfahren und eine Einrichtung zur Übertragung von Farbbildern in der Faksimiletechnik, wobei das Farboriginal mittels eines optisch-elektrischen Abtasters trichromatisch abgetastet wird und Farbsignale gewonnen, übertragen und wieder aufgezeichnet werden.

Bei bekannten Farbfaksimilesystemen ist es üblich, bei der Übermittlung der Farbfotos über den Telefoniekanal den roten, grünen und blauen Farbauszug bildsequentiell zu übertragen. Dabei ergibt sich die dreifache Übertragungszeit gegenüber einer Grauton-Telebildübertragung und es steht kein kompatibler Schwarz/Weiß-Auszug des Farbbildes zur Verfügung, was von Nachteil ist, weil eine Aufzeichnung eines Schwarz/Weiß-Bildes mittels üblicher Schwarz/Weiß-Aufzeichnungsgeräte nicht möglich ist.

Der vorliegenden Erfindung liegt daher die Aufgabe zugrunde, ein verbessertes Verfahren und eine Einrichtungsübertragung von Faksimilebildern über einen Telefoniekanal anzugeben.

- 2 -

Die Erfindung erreicht dies durch die im kennzeichnenden Teil des Anspruchs 1 angegebenen Merkmale.

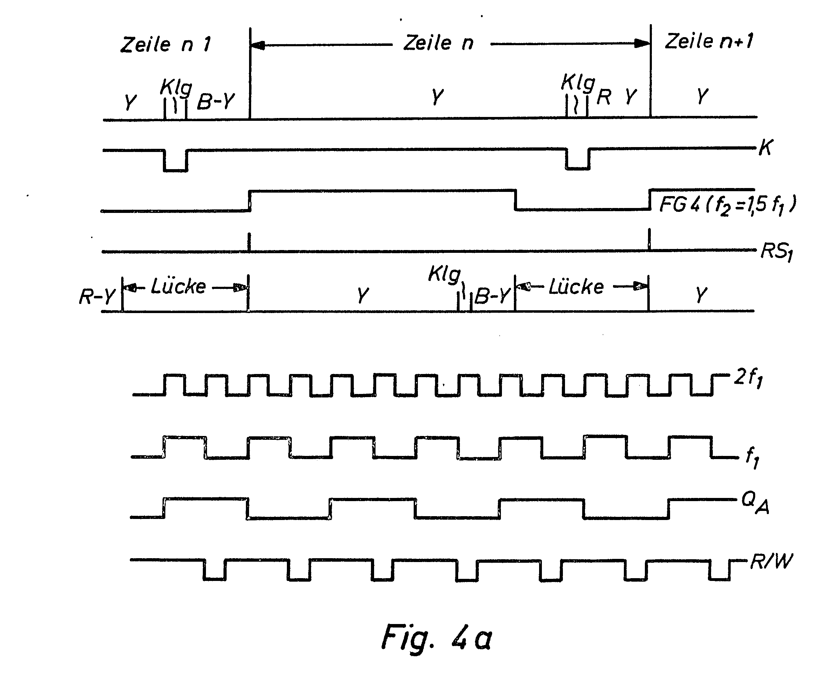

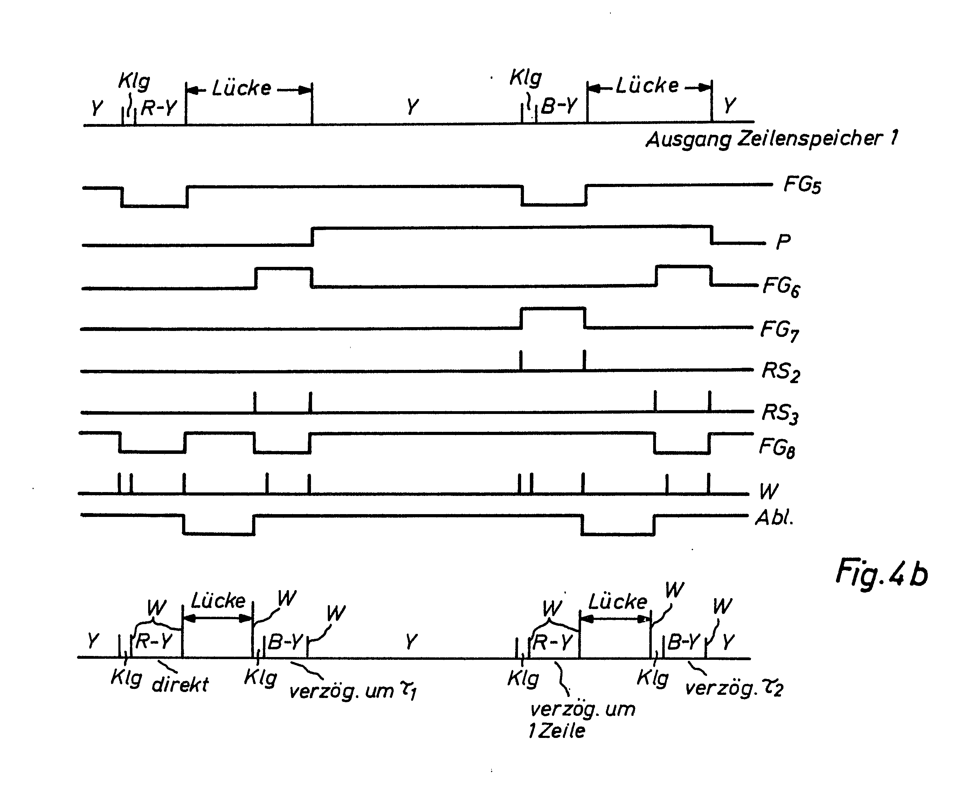

Vorteilhafte Weiterbildungen der Erfindung sind in den Figuren 1 bis 16 näher dargestellt.

Es zeigen:

Fig. 1    ein Schaltbild eines Farbtelebildsenders mit alternierender Übertragung der Farbdifferenzsignale in der Einspannlücke,

Fig. 2    ein Impulsdiagramm für die Figur 1,

Fig. 3    ein Schaltbild eines Farbbildempfängers für die Aufzeichnung auf Schwarz-Weiß-Fotomaterial,

Fig. 4a   Impulsdiagramme für die Ansteuerung der einzelnen Stufen
und 4b    der Figur 3,

Fig. 5    eine Wahrheitstabelle für Figur 3,

Fig. 6    ein Schaltbild für einen Telebildsender mit zeilensequentiell übertragender Farbdifferenzsignale,

Fig. 7    der Aufbau der Information einer übertragenden Zeile,

Fig. 7a   eine vergrößerte Darstellung mit der Eintastung des Weiß-
          und Grauwertes,

Fig. 8    Impulsdiagramme zur Figur 6,

Fig. 9    eine Wahrheitstabelle zur Figur 6,

Fig. 10   ein Schaltbeispiel für ein Farbtelebildempfänger für
          zeilensequente Übertragung der Farbdifferenzsignale in
          der Einspannlücke,

Fig. 11   Impulsdiagramme für Figur 10,
und  12

Fig. 13   ein Ausschnitt aus einer Schaltung für eine Modifikation
          der Schaltung gemäß Figur 10 für zeilenalternierende
          Übertragung der Farbdifferenzsignale in der Abtastlücke,

Fig. 14   Impulsdiagramme für Figur 13,
und  15

Fig. 16   ein Beispiel für eine Überspieleinrichtung zur Abtastung
          der auf Schwarz-Weiß-Fotopapier aufgezeichneten kompri-
          mierten Farbbilder.

- 4 -

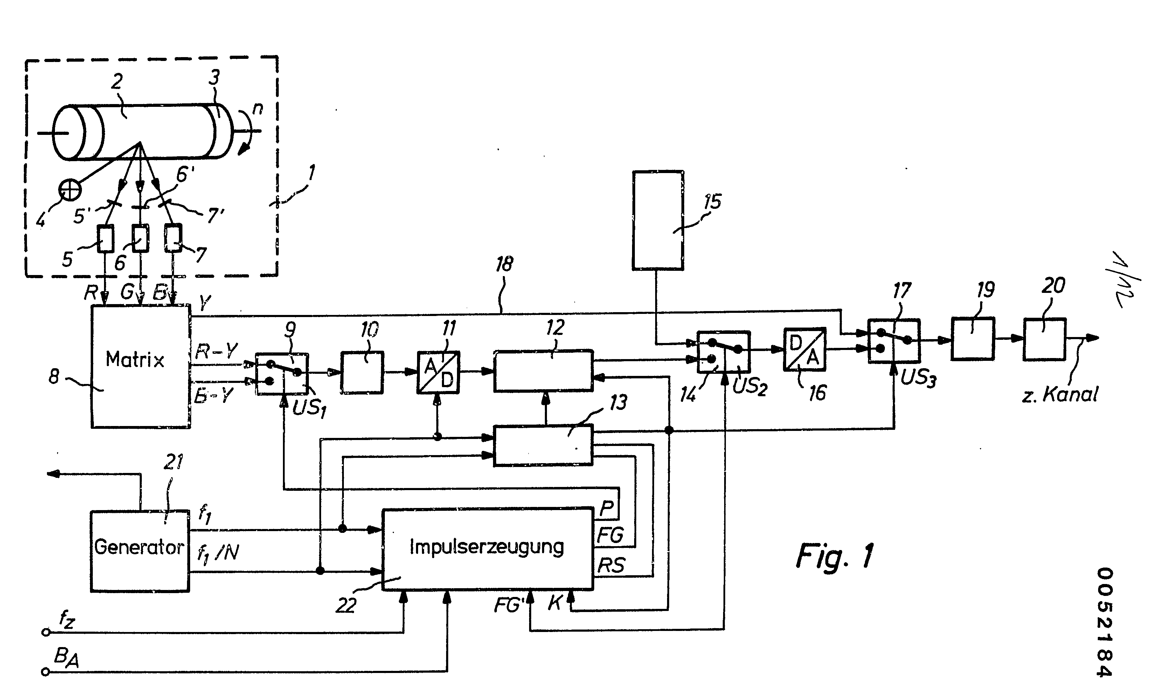

Figur 1 zeigt ein Farbbildabtaster ein, bei dem ein Farbfoto 2, das auf eine rotierende Trommel 3 aufgespannt ist. Mittels einer Lichtquelle 4 wird das Bild 2 trichromatisch über die Farbfilter 5', 6', 7' und Fotosensoren 5, 6 und 7 abgetastet. Die erhaltenen Farbmeßwerte werden über eine in der Fernsehtechnik bekannte Matrixschaltung 8 in ein Luminanzsignal Y nach der Formel Y = 0,3 R + 0,59 G + 0,11 B und in Farbdifferenzsignale R-Y und B-Y umgewandelt. Über einen Umschalter 9 ($US_1$), der mit einem Impuls P gesteuert wird, gelangen die Farbdifferenzsignale von der Matrixschaltung 8 zeilenalternierend an einen Tiefpaß 10 ($TP_1$). Anschließend erfolgt in der Stufe 11 eine Analog-Digital-Wandlung. Das Digitalsignal wird auf einen Zeilenspeicher 12 (C), gegeben, der aus einem Random-Access-Memory (RAM) besteht. In diesem Speicher wird durch langsames Einlesen mit der Frequenz $f_1/N$ ein schnelles Auslesen mit der Frequenz $f_1$ eine Kompression vorgenommen. Hierzu ist eine Adreßzählerstufe 13 vorgesehen, deren Steuerung über ein Freigabesignal FG und einen Rückstellimpuls RS erfolgt. Das komprimierte Farbdifferenzsignal gelangt aus dem Zeilenspeicher anschließend auf einen Umschalter 14 ($US_2$), über den ein fester Signalwert, der in der Stufe 15 erzeugt wird, als Referenzpegel eingetastet werden kann. Nach der anschließenden Analog-Digital-Wandlung in der Stufe 16 wird mit dem Umschalter 17 ($US_3$) noch das Luminanzsignal Y, das auf der Leitung 18 anliegt, in den Signalverlauf eingeführt. Dieses Signalgemisch gelangt über einen Tiefpaß 19 ($TP_2$) und einen Modulator 20 auf den Übertragungskanal.

- 5 -

Ein Frequenzgenerator 21 erzeugt die Spannungsversorgung für den
Antrieb der Trommel 3, d. h. er sorgt für eine stabile Walzenstrehzahl n und erzeugt die Frequenzen $f_1$ und $f_1/N$, die fest mit der
Drehzahl n verkoppelt sind. Von der Abtastwalze 3 wird ein Zeilenimpuls $f_z$ und aus der Synchronisierung zu Beginn der Übertragung
ein Bildanfangsimpuls $B_A$ abgeleitet. Aus diesen Signalen gewinnt
die Impulserzeugung 22 alle benötigten Steuersignale. Die Ausbildung
solcher Steuerwerke ist in der Technik allgemein bekannt und es
genügt, wenn die entsprechenden Signalkurven, die in diesen Stufen
erzeugt werden sollen, angegeben werden.

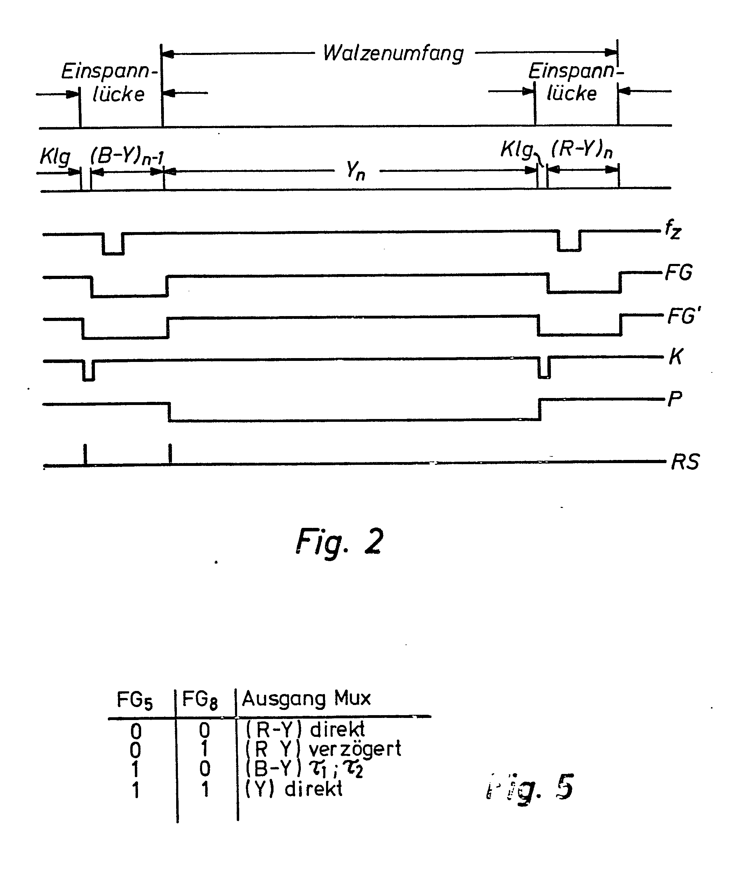

Zur Erläuterung der zeitlichen Zuordnung der einzelnen Impulse ist
in Figur 2 einmal eine Zeile des gesendeten Signals dargestellt. Bei
einem für Telebildgeräte genormten Walzendurchmesser von 7 cm ergibt
sich ein Walzenumfang von etwa 22 cm, auf dem in der Regel ein
Telebild vom Format 13 x 18 $cm^2$ aufgezeichnet werden kann. Bei
diesem Farb-Telebildsender soll der Schwarz-Auszug des Farbbildes,
das Luminanz-Signal, in der aktiven Zeile und die komprimierten
Farbdifferenzsignaleteilen alternierend in der Einspannlücke übertragen werden. Bei einer Einspannlücke von 4 cm und einer Bildbreite
von 18 cm ergibt sich demnach ein Kompressionsfaktor von 4,5.
Wählt man den Faktor 5, hat man noch etwas Platz gewonnen für die
Vermittlung eines Referenzpegels. Für diesen Spezialfall ist einmal
eine Zeile des Signals dargestellt. Die Ableitungen der einzelnen
Impulsreihen in der Impulserzeugerstufe 22 erfolgt in konventioneller
Weise aus den beiden Signalen $f_1$ und $f_1/N$, den Zeilenimpuls $f_z$

und den Bildanfangsimpuls $B_A$. Der Freigabeimpuls FG liegt nur dann auf logisch "0", wenn ein Farbdifferenzsignal aus dem Speicher gelegen werden soll. Dann wird der Adreßzähler C mit dem Takt $f_1$ verbunden. Das Auslesen geschieht nur, wenn FG und F-logisch 0 sind.

Liegt FG' auf logisch "1" wird in dem Zahlenspeicher eingeschrieben. Gleichzeitig erhält der Adreßzähler D den Takt $f_1/N$. Die Rücksetzimpulse RS setzen den Zähler auf eine definierte Anfangsadresse.

Mit dem Impuls K wird der Umschalter US 2 gesteuert. Wenn K auf logisch "0" erfolgt die Eintastung des Referenzpegels. FG' wird auch noch zur Steuerung des Umschalters $US_3$ benutzt. Falls FG' auf logisch "1" liegt, gelangt das Luminanzsignal auf den Ausgang.

Das Signal P steuert den Umschalter $US_1$. Es wird zur Beginn der Übertragung mit dem Bildanfangsimpuls $B_A$ auf einen definierten Anfangszustand gebracht. P liegt z. B. immer bei B-Y auf logisch "1" und bei R-Y auf logisch "0" oder umgekehrt.

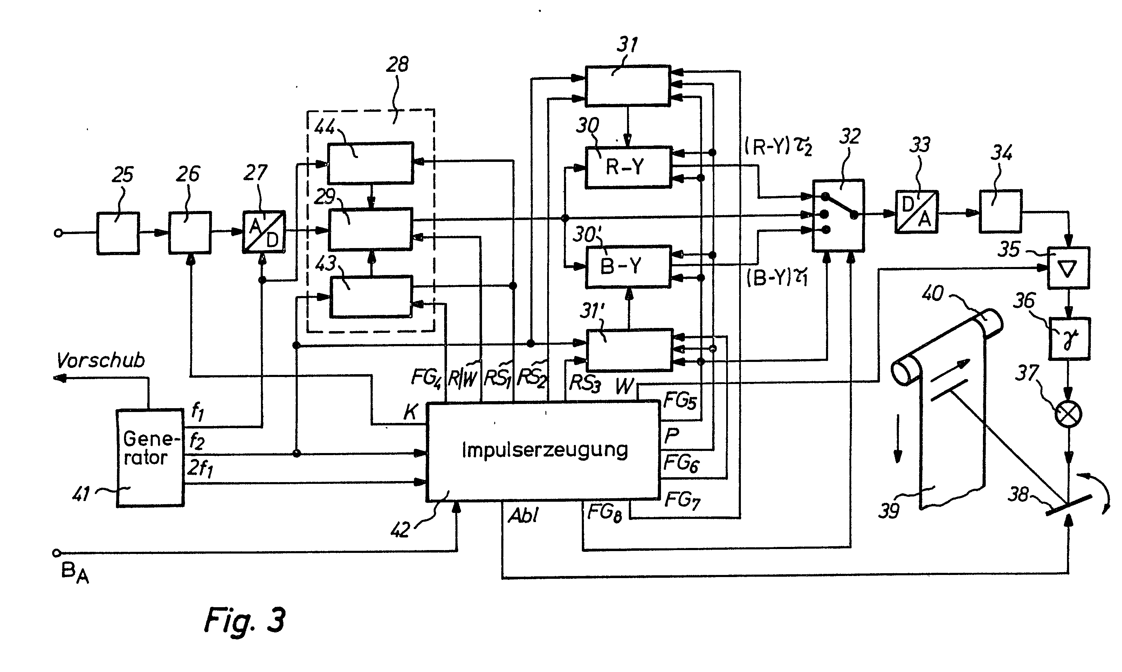

In der Figur 3 gelangt von Demodulator das Eingangssignal über einen Tiefpaß 25 ($TP'_1$) und eine Klemmstufe 26 (Klg) auf einen Analog-Digital-Wandler 27, von dem das Signal einer Kompressionsstufe 28 zugeleitet wird. In einem Zeilenspeicher 29 wird das Signal durch langsames Einschreiben mit der Frequenz $f_1$ ein schnelles Auslesen mit der Frequenz $f_2$ zeitlich kompremiert und anschließend auf die beiden Zeilenspeicher 30 und 30' (N-Y) und

(P-Y) und auf einen Multiplexer 32 gegeben Adressenzähler 31 und 31' zugeordnet. Von den Zeilenspeichern 30 und 30' gelangen die Signale jeweils über den Multiplexer 32 auf einen Digital-Analog-Wandler 33, von wo aus sie über einen Tiefpaß 34 (TP) auf einen steuerbaren Verstärker 35 gelangen. Mittels des Verstärkers 35 können in dem Signalverlauf Weißmarken eingetastet werden. Diese Eintastung hätte auch im Digitalbereich mit dem Multiplexer durchgeführt werden können (siehe Sender). Nach einer Entzerrung der nicht linearen Schreiblampen in Filmlinien und Kennlinien in der Entzerrungsstufe 36 wird das Signal nämlich auf eine Schreiblampe 37 gegeben. Das Licht der Schreiblampe fällt auf einen Schwingspiegel 38, mit dem die Ablenkung in Zeilenrichtung vorgenommen wird. Die Vertikalablenkung erfolgt über den Vorschub des Papiers 39, das auf einer Rolle fest aufgewickelt wird.

Ein stabiler Frequenzgenerator 41 liefert die Frequenzen $f_1$, $f_2$ und $2f_1$. Aus der Synchronisierung zu Beginn der Übertragung wird ein Bildanfangsimpuls $B_A$ abgeleitet. Aus diesen Eingangsinformationen stellt die Impulserzeugungsschaltung 42 alle benötigten Steuersignale zur Verfügung.

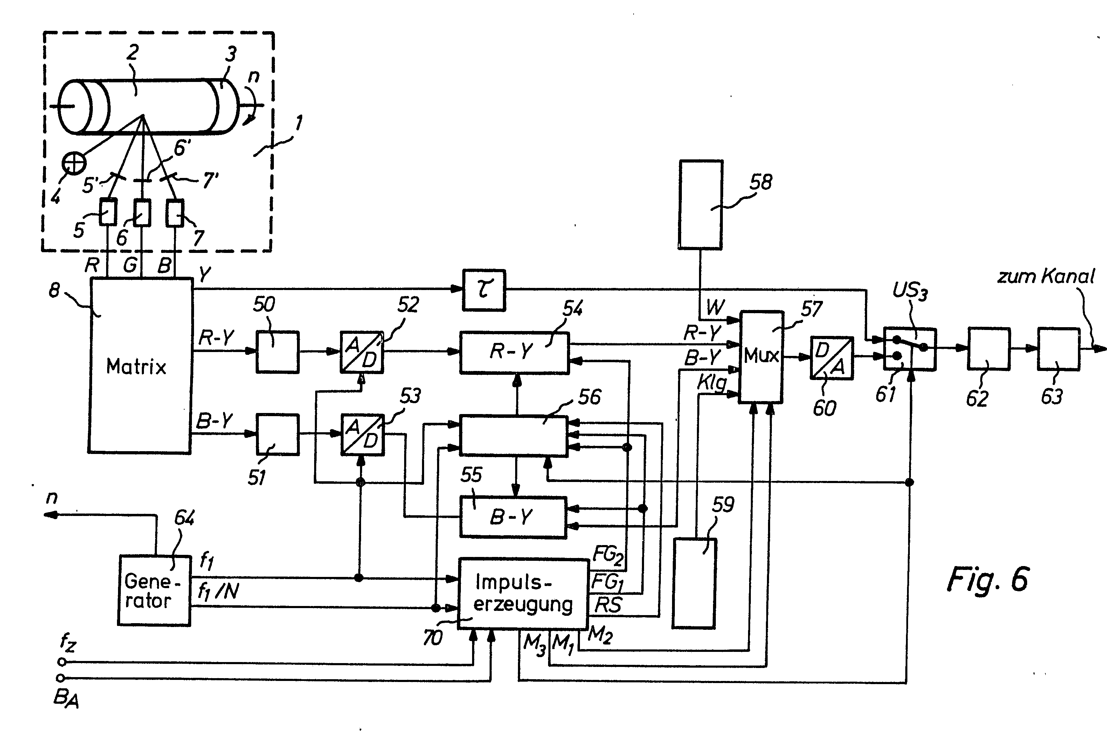

Für zeilenartige Zuordnung der einzelnen Steuersignale wird in Figur 5 eine Bildzeile näher n betrachtet. Während dieser Zeile stehen zeitlich nacheinander das Luminanzsignal Y, das Farbdifferenzsignal R-Y und ein Referenzwert Klg am Zeilenspeicher 29 an. Der Adressenzähler 43, lesen, wird dem Freigabesignal $FG_4$

- 8 -

gesteuert. So lange FG$_4$ auf logisch "1" liegt, ist der Zähler aktiviert. Mit dem Rücksetzimpuls RS$_1$ werden beide Adreßzähler in einen definierten Anfangszustand gebracht. Der Adreßzähler "Schreiben", 44, ist nur dann mit dem Zeilenspeicher 29 verbunden, wenn der Schreib-Leseimpuls R/S auf logisch "0" liegt. Im anderen Fall ist der Adreßzähler "Lesen" mit dem Zeilenspeicher 29 verbunden. Dadurch, daß der Adreßzähler "Lesen" mit einer höheren Frequenz betrieben wird, als der Zähler "Schreiben", wird der Speicherinhalt unter jeder Adresse zuerst gelesen und dann, zeitlich versetzt, eine neue Information in den Speicher eingeschrieben. Da jede Adresse nur einmal in einer Zeile vorkommt, wird die Signalinformation zusätzlich zur Kompression noch um eine Zeile verzögert. Durch die Kompression entsteht eine Lücke, in die das zweite Farbdifferenzsignal eingesetzt werden kann.

Da beide Farbdifferenzsignale zeilenalternierend übertragen werden, müssen sie entsprechend seitlich verzögert werden, damit sie simultan während einer Zeile zur Verfügung stehen. Die zeitliche Folge, in welcher die Farbdifferenzsignale und das Luminanzsignal aneinandergereiht werden, wird durch die Ansteuerung der Adreßzähler, der Zeilenspeicher und des Multiplexers bestimmt. Es ist praktisch jede beliebige Reihenfolge möglich (R-Y;Y;B-Y;Y;R-Y;B-Y;R-Y;B-Y;Y- usw.) Für den Spezialfalls, das am linken Bildrand das komprimierte Farbdifferenzsignal B-Y in der Bildmitte das Luminanzsignal Y und am rechten Bildrand das kompremierte Farbdifferenzsignal R-Y aufgezeichnet werden,

- 9 -

soll der zeitliche Verlauf der Steuersignale angegeben werden.

Das Freigabesignal $FG_5$ liegt auf logisch "0", wenn ein Farbdifferenzsignal am Ausgang des Zeilenspeichers 29 zur Verfügung steht. In diesem Fall das Farbdifferenzsignal in den betreffenden Zeilenspeicher eingeschrieben werden. Ist das Signal P logisch

"1" wird der Zeilenspeicher B-Y angewählt im anderen Fall der Zeilenspeicher R-Y.

Die beiden Freigabesignale $FG_6$ und $FG_7$ bestimmten unabhängig

von P des Auslesemodus. Die Zeilenspeicher B-Y bzw. R-Y werden

ausgelesen, wenn $FG_6$ bzw. $FG_7$ auf logisch "1" liegt. Da R-Y während einer Zeile direkt, während der nächsten um eine Zeile verzögernd aufgezeichnet wird, wiederholt sich das Signal $FG_7$

nur alle zwei Zeilen. Die Impulse $RS_2$ und $RS_3$ setzen die

Adreßzähler R-Y, B-Y in einen definierten Anfangszustand. Der Mutliplexer 32 wird über die Freigabesignale $FG_5$ und $FG_8$.

Welches Signal am Multiplexerausgang ansteht, gibt die Wahrheitstabelle gemäß Figur 5 wieder über den Ablenkimpuls Abl.

Aufgezeichnet sind auf dem Fotopapier das Schwarz-Weiß-Bild in der Mitte und rechts und links an den Seiten Informationen der Farbdifferenzsignale aufgezeichnet. Es ist auch denkbar, diese Reihenfolge, wie bereits vorher erwähnt, beliebig zu ändern, ohne daß dadurch ein Informationsverlust auftreten würde. Eine weitere Möglichkeit der Übertragung der komprimierten Farbdifferenzsignale besteht darin, die Übertragungszeilen sequentiell vorzunehmen,

- 10 -

d. h. die Farbdifferenzsignale jeweils am Anfang und am Ende jeder Zeile des Luminanzsignals, das dem Schwarz-Weiß-Auszug des Farbbildes entspricht, in der Einspannlücke zu übertragen.

In Figur 6 ist wie in Figur 1 eine Farbabtasteinheit 1 vorgesehen, bei der bis zur Matrizierungsschaltung 8 identische Baugruppen wie in Figur 1 verwendet worden sind, weshalb hier ebenfalls dieselben Bezugszahlen verwendet wurden. Auf eine Beschreibung bis zur Matrizierungsschaltung 8 wurde, um Wiederholungen zu vermeiden, verzichtet.

Am Ausgang der Matrizierungsschaltung 8 ist in den Signal der Farbdifferenzsignale R-Y und B-Y jeweils ein Tiefpaß 50, 51 vorgesehen, von dem die Signale auch eine Analog-Digital-Wandlerschaltung 52 und 53 gelangen, die die Farbdifferenzsignale auf jeweils einen Zeilenspeicher 54 und 55, der aus einem RAM (Random Access Memory) besteht, weitergeleitet werden. Durch einen Adreßzähler 56 (C) und mit den Freigabesignalen $FG_1$ und $FG_2$ wird der Speicher gesteuert. Die zeitliche Signalkompression erfolgt durch Einschreiben in den Speicher 54 mit der Frequenz $f_1/N$ und durch schnelles Auslesen mit der Frequenz $f_1$. Von Zeilenspeicher 54 gelangen die Signale auf einen Multiplexer 57, an dessen Eingängen noch ein digital einstellbarer Grauwert und ein Weißwert anliegen, die jeweils von den Stufen 58 und 59 geliefert werden. Der Grauwert wird als Klemmpotential eingetastet, der Weißwert ganz zur Synchronisation bei der Dekompression dienen.

- 11 -

Anschließend erfolgt eine Digital-Analog-Wandlung in der Stufe 60
und die Eintastung der entsprechenden Signalverarbeitungsdauer
der Farbdifferenzsignale verzögerte Luminanzsignal in dem
Schalter 61 (US'$_3$). Das komplette Signalgemisch gelangt dann
über einen Tiefpaß 62 (TP'$_2$) und einen Modulator 63 auf den
Übertragungskanal.

Ein Frequenzgenerator 64 sorgt für eine stabile Walzendrehzahl n
und erzeugt die Frequenzen f$_1$ und f$_1$/N, die mit fest mit der
Drehzahl n verkuppelt sind. Von der Abtastwalze wird ein Zeilenimpuls f$_z$ und aus der Synchronisierung zu Beginn der Übertragung
ein Bildanfangsimpuls B$_A$ abgeleitet. Aus diesen Signalen gewinnt
die Impulserzeugungsstufe 65 alle benötigten Steuersignale.

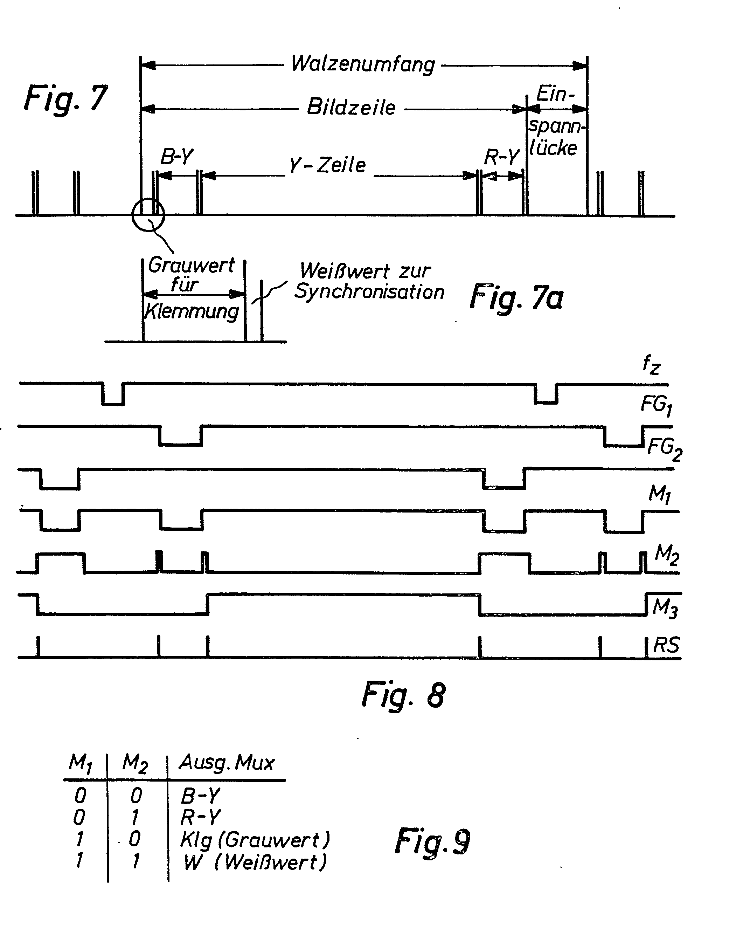

Zur Erläuterung der zeitlichen Zuordnung der einzelnen Impulse ist
in Figur 7 einmal eine Zeile des gesendeten Signals dargestellt.
Die Figur 7a zeigt die Eintastung von Grauwerten und Weißwerten.
Eine für Telebilder genormten Walzendurchmesser von 7 cm ergibt
sich ein Walzenumfang von etwa 22 cm, auf dem in der Regel ein
Telebild vom Format 13 x 18 m$^2$ aufgezeichnet werden kann. Wenn
am linken und rechten Bildrand die komprimierten Farbdifferenzsignale aufgezeichnet werden sollen, kann man das volle Bildformat
bei der Farb-Telebild-Übertragung nicht ausnutzen, sondern darf
nur ein maximal etwa 13 cm breites Bild abtasten. Komprimiert
man die Farbdifferenzsignale um den Faktor 6, ist deren Bildbreite
etwa 2,17 cm. Es kann dann noch etwa 0,47 cm Grauwert für die Klemmung und insgesamt 4 x etwa 0,5 mm Weißwert für jede aufgezeichnet werden.

In Figur 8 sind die einzelnen Impulsreihen für die Steuerung des
Senders dargestellt. Die Abtastung der einzelnen Impulsreihen
erfolgt in konventioneller Weise aus den beiden Signalen $f_1$
und $f_1/N$, dem Zeilenimpuls $f_z$ und dem Bildanfangsimpuls $B_A$.
Der Kompressionsfaktor N beträgt in diesem Spezialfall N=6. Er
sollte aber aus Gründen der Farbqualität möglichst nicht höher
als 10 gewählt werden. Immer dann wenn $FG_1$ auf logisch "0"
liegt, kann der Zeilenspeicher 55 (B-Y) ausgelesen werden.
Gleichzeitig wird der Adreßzähler 56 (C) mit dem Zeilenspeicher 55
(B-Y) verbunden und mit der Frequenz $f_1$ angesteuert. Wenn $FG_2$
auf logisch "0" liegt, kann der Zeilenspeicher R-Y ausgelesen
werden. Der Adreßzähler C wird mit dem Zeilenspeicher R-Y verbunden und ebenfalls mit der Frequenz $f_1$ angesteuert. Das
Auslesen kann in beiden Fällen nur erfolgen, wenn $M_3$ auf
logisch "0" liegt. Falls alle drei Signale im Zustand logisch
"1" befinden, ist der Adreßzähler mit beiden Zeilenspeichern
verbunden und es wird eingeschrieben. Am Zähler liegt die
Frequenz $f_1/N$ an.

Figur 9 zeigt eine Wahrheitstabelle für die Ansteuerung des
Multiplexers 57. Die Steuerung des Multiplexers erfolgt über
die Impulse $M_1$ und $M_2$. Die Wahrheitstabelle gibt an, welches
Signal am Anfang zur Verfügung steht. Mit dem Schalter $US'_3$

- 13 -

wird das Luminanzsignal eingetastet. Liegt $M_3$ auf logisch "0"
ist $US'_3$ mit dem Ausgang des D/A-Wandlers verbunden. Liegt
$M_3$ auf logisch "1", wird das Luminanzsignal Y ausgewählt.

Es ist auch möglich, das Luminanzsignal am Anfang der Matrix
Analog-Digital zu wandeln, zu verzögern und damit auf den
Multiplexer zu gehen. Dadurch würde der Umschalter $US'_3$
entfallen.

Mit dem Rücksetzimpuls $R_S$ wird der Adreßzähler 56 (C) jeweils
in einen definierten Anfangszustand gesetzt.

Es besteht noch die Möglichkeit ein Farbdifferenzsignal
gespiegelt aufzuzeichnen. Daß erreicht man dadurch, daß man
dem Adreßzähler 56 z. B. beim Einschreiben vorwärtszählen läßt
und beim Auslesen rückwärts.

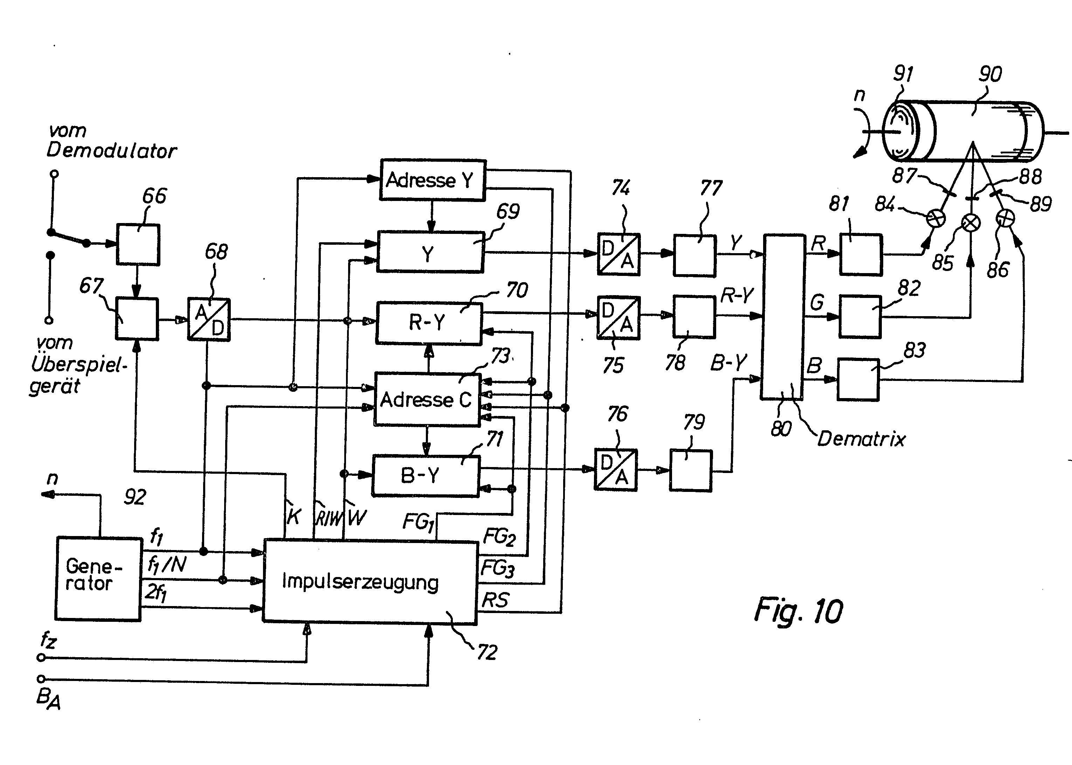

Figur 10 zeigt einen Farbtelebildempfänger zur Aufzeichnung der
Signale, die zeilensequentiell vom Sender der Figur 6 über den
Telefoniekanal gelangen. Von Demodulator oder vom Überspielgerät,
das später noch dargestellt wird, gelangt das Eingangssignal
über einen Tiefpaß 66 und eine Klemmstufe 67 (Klg) auf einen
Analog-Digital-Wandler 68, dessen Ausgang mit den drei Zeilenspeichern 69, 70 und 71 (Y, R-Y und B-Y) und einer Impulserzeugerschaltung 72 verbunden. Im Zeilenspeicher 69 (Y) wird das
Luminanzsignal um eine Zeile verzögert, in den Zeilenspeicher 70 und 71 (R-Y und B-Y) erfolgt durch schnelles Einlesen mit der
Frequenz $f_1$ und langsames Auslesen mit der Frequenz $f_1/N$
die zeitliche Dehnung. Die Adreßsteuerung wird durch die Stufe 73
(C) vorgenommen. Durch eine geeignete Ansteuerung der drei
Speicher 69, 70 und 71 erreicht man, daß die Signalkomponenten Y,
R-Y und B-Y, die nacheinander während einer Zeile übertragen
werden, sequentiell eingeschrieben und simultan ausgelesen werden.
Vom Speicher aus gelangen die Signale über jeweils einen Digital-
Analog-Wandler 74, 75 und 76 auf die drei Tiefpaßfilter 77, 78
und 79. Eine Dematrix 80 erzeugt aus dem Luminanzsignal Y und
den beiden Farbdifferenzsignalen R-Y und B-Y wieder die Farbwertsignale R, G und B. Nach Entzerrung der nicht linearen Schreiblampen und Filterkennlinien in den Stufen 81, 82 und 83 werden
diese Signale auf drei Schreiblampen 84, 85 und 86 gegeben, die
über drei Farbfilter 87, 88 und 89 das Farbfotomaterial 90, das
auf der Trommel 91 aufgespannt ist, belichtet. Ein Frequenzgenerator 92 sorgt für eine stabile Walzendrehzahl n und erzeugt
die Frequenzen $2f_1$, $f_1$ und $f_1/N$, die fest mit der Walzendrehzahl n verkoppelt sind. Von der Schreibwalze 91 wird ein Zeilenimpuls $f_z$ und aus der Synchronisierung zu Beginn der Übertragung
ein Bildanfangsimpuls $B_A$ abgeleitet. Aus diesen Signalen stellt
die Impulserzeugungsschaltung 71 den Klemmimpuls K, den Schreib-
Leseimpuls R/W, die Freigabesignale $FG_1$, $FG_2$ und $FG_3$ und den
Rücksetzimpuls RS zur Verfügung. Aus dem Ausgangssignal des A/D-

Wandlers läßt sich in der Impulserzeugung der Weißwert W, der zu
Beginn und am Ende der Farbdifferenzsignale eingetastet wurde,
auf einfache Weise erkennen.

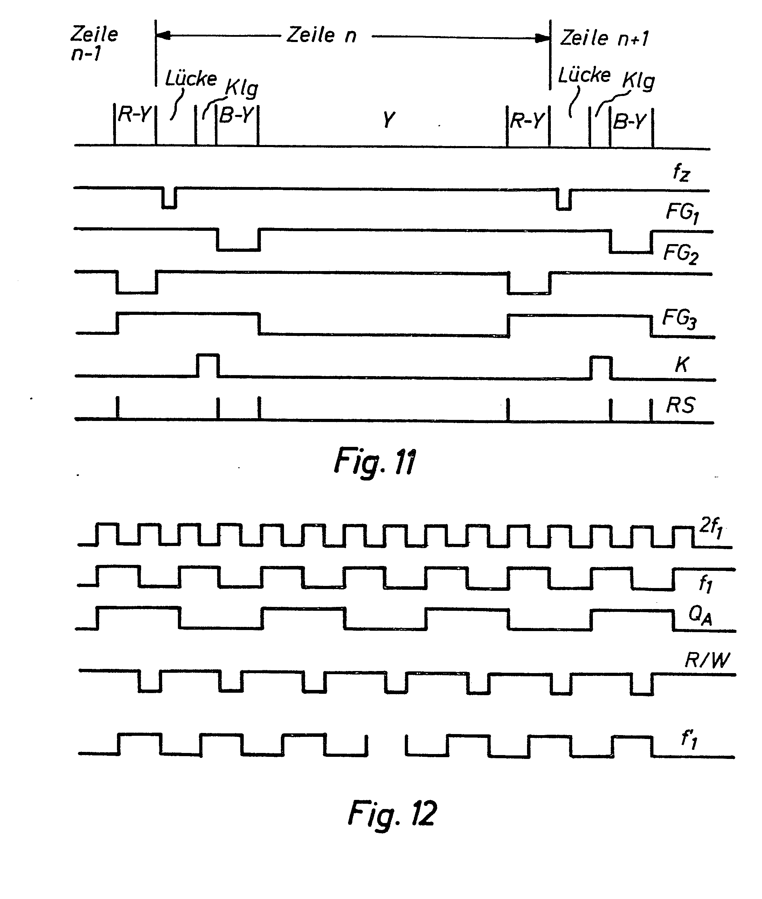

Zur Erläuterung der zeitlichen Zuordnung der einzelnen Impulse
ist in Figur 11 einmal eine Zeile des empfangenen Signals dargestellt. In jeder Zeile werden das Luminanzsignal Y, beide
komprimierten Farbdifferenzsignale R-Y und B-Y und ein Farbsignalwert Klg, der einem mittleren Grau entspricht, übertragen.
Das Freigabesignal $FG_1$ liegt auf logisch "0", wenn B-Y empfangen
wird. Dann kann in dem Zeilenspeicher B-Y eingeschrieben werden.
Der Adreßzähler C ist mit dem Zeilenspeicher B-Y und wird mit
der Frequenz $f_1$ angesteuert. Analog dazu liegt das Freigabesignal $FG_2$ auf logisch "0", wenn R-Y empfangen wird. Dadurch
kann in dem Zeilenspeicher R-Y eingeschrieben werden. Der Adreßzähler C wird dazu mit dem Zeilenspeicher R-Y und der Frequenz $f_1$
verbunden. Das Freigabesignal $FG_3$ steuert den Auslesevorgang
beider Speicher. Liegt $FG_3$ auf logisch "0", ist der Adreßzähler C mit beiden Zeilenspeichern und einem Eingangstakt mit
den Frequenzen $f_1/N$ verbunden. Da $FG_1$ und $FG_2$ sehr nach
dieser Zeit auf logisch "1" liegen, können beide Zeilenspeicher
ausgelesen werden.

Zur Verzögerung des Luminanzsignals um eine Zeile wird in der
Figur 11 aus den Frequenzen $2f_1$ ein Schreib/Lesesignal R/W
erzeugt. Liegt R/W auf logisch "0", kann unter der entsprechenden

- 16 -

Adresse eingeschrieben werden. Wie ein Vergleich mit dem niedrigsten Bit des Adressenzählers Y, $Q_A$ zeigt, ist R/W fest dem Signal $Q_A$ zugeordnet. Da dieselbe Adresse am Zeilenspeicher erst nach genau einer Zeile wieder auftritt, kann man das Luminanzsignal um eine Zeile verzögern, indem man unter jeder Adresse zunächst die Speicherinformation ausliest und anschließend unter derselben Adresse neu einschreibt. Das soll durch den Lesetakt $f_1$, angedeutet werden. Mit der positiven Flanke dieses Taktes kann z. B. die Speicherinformation in ein Latch (D-Flip-Flop) entnommen werden. Damit ist gewährleistet, daß unter jede Adresse zunächst ausgelesen und anschließend neu eingeschrieben werden kann.

Mit dem Rücksetzimpuls RS werden alle Adreßzähler in einen definierten Anfangszustand gesetzt. Weiterhin liefert die Impulserzeugungsschaltung noch den Klemmimpuls K.

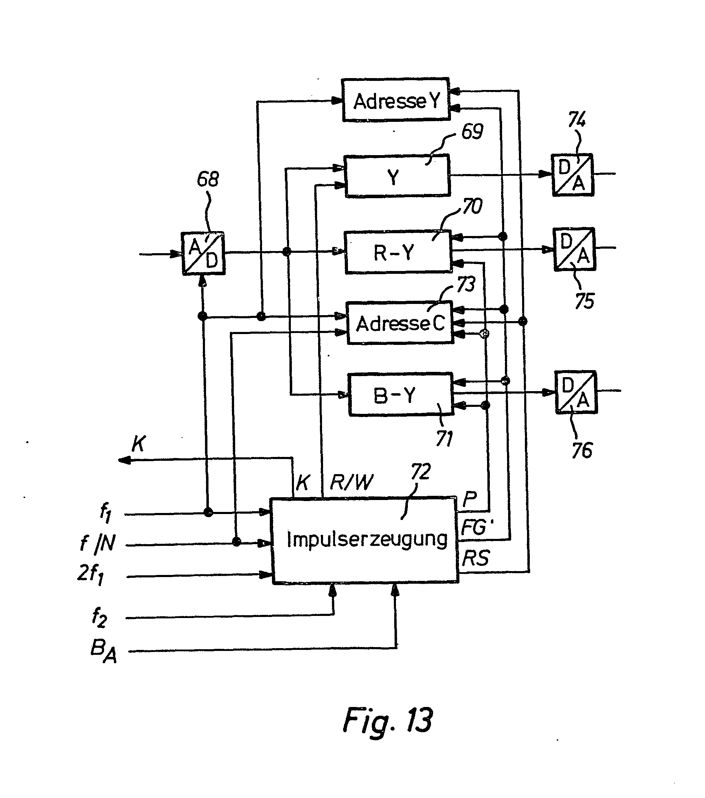

In den Figuren 13, 14 und 15 ist dargestellt, daß der Empfänger gemäß Figur 10 auch für zeilenalternierende Aufzeichnung geeignet ist.

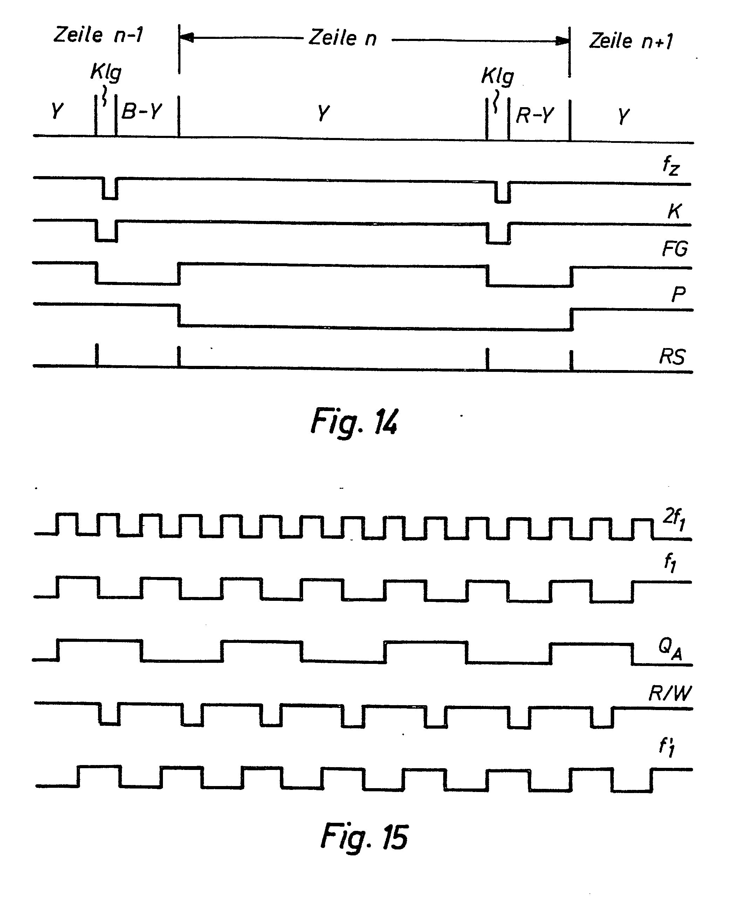

Falls die beiden Farbdifferenzsignale zeilenweise alternierend gemäß Figur 1 in der Einspannlücke übertragen werden, ändert sich der prinzipielle Aufbau des Farbtelebildsenders nicht gegenüber der vorher beschriebenen Anordnung. Zur Verdeutlichung ist dies in der Figur 13 nochmals dargestellt. Lediglich die Steuersignale für die Zeilenspeicher und Adreßzähler und ihre deutliche Zuordnung hat sich geändert. Zum Vergleich ist in Figur 14 wieder eine Zeile des empfangenen Signals dargestellt.

In der Zeile n wird z. B. der Referenzwert Klg, das Luminanzsignal Y und das kompremierte Farbdifferenzsignal R-Y empfangen, in der Zeile n+1 Klg, Y und B-Y, usw. Das Freigabesignal FG

liegt auf logisch "1", wenn das Luminanzsignal Y empfangen wird.

Während der Einspannlücke, in der ein Farbdifferenzsignal und der Referenzsignal Klg übermittelt werden, ist logich "0".

Das Signal P ergibt sich durch Halbierung der Frequenz des Freigabesignals FG. Damit P die richtige Phasenlage hat, wird dieses Signal zu Beginn der Übertragung von dem Bildanfangssignal in eine definierte Phasenlage gebracht. So erreicht man, daß P immer z. B. auf logisch "1" liegt, wenn das Farbdifferenzsignal B-Y empfangen wird bzw. auf logisch "0" bei R-Y.

Wenn FG logisch "0" und P logisch "1" sind, kann in dem Zeilenspeicher B-Y eingeschrieben werden. Der Adreßzähler C ist mit dem Zeilenspeicher B-Y verbunden und wird mit der Frequenz $f_1$

angesteuert. Analog wird in dem Zeilenspeicher R-Y eingeschrieben, wenn FG und P auf logisch "0" liegen. Der Adreßzähler C ist in diesem Fall mit dem Zeilenspeicher R-Y verbunden und wird ebenfalls

mit der Frequenz $f_1$ angesteuert. Er sperrt sich selbst, wenn das betreffende Farbdifferenzsignal R-Y oder B-Y eingelesen ist. Liegt FG auf logisch "1", ist unabhängig vom Signal P der Adreßzähler C

mit den beiden Zeilenspeichern R-Y und B-Y verbunden und der

- 18 -

Inhalt beider Speicher kann mit der Taktfolgefrequenz $f_1/N$ ausgelesen werden.

Die Verzögerung des Luminanzsignals um eine Zeile erfolgt wie bei der ersten Ausführung, wobei der Farbdifferenzsignalwert in einer Zeile zusammen und mit dem Luminanzsignal übertragen wurden, daher stimmen die Figuren 15 und 12 überein.

Mit dem Rücksetzsignal RS werden alle Adreßzähler in einen definierten Anfangszustand gebracht. Weiterhin liefert die Impulserzeugungsschaltung noch den Klemmimpuls K.

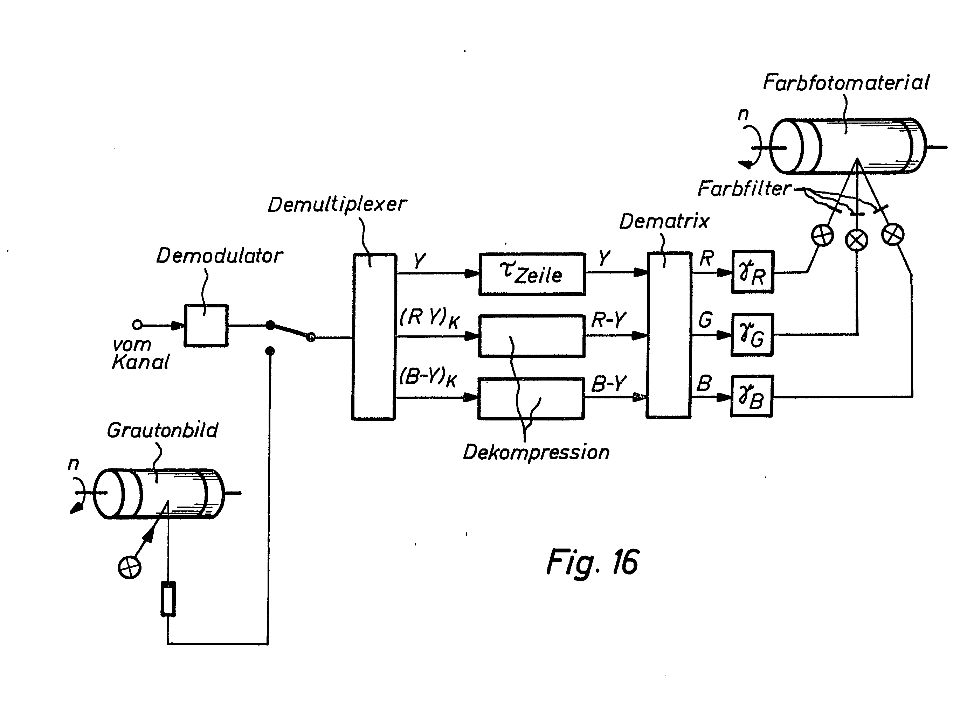

Figur 16 zeigt im Prinzip die Wirkungsweise der vorher erwähnten Vorschaueinrichtungen in Verbindung die neu dargestellten Farbempfänger gemäß Figur 10. Mit der Vorschaueinrichtung werden z. B. die archivierten auf Schwarz-Weiß-Fotopapier aufgezeichneten Bilder, die einmal das Luminanz-Signal, d. h. im Schwarzauszug und zu beiden Seiten die komprimierten Farbdifferenzwertsignale enthalten, abgetastet. Ein Demultiplexer trennt dann das Luminanzsignal Y und die beiden Farbdifferenzsignale voneinander. Um die Bildsignallaufzeiten bei der Verarbeitung auszugleichen, muß die Luminanz um eine Zeile verzögert werden. In jeweils einer Dekompressionsschaltung erfolgt die zeitliche Dehnung der beiden Farbdifferenzsignale. Eine Dematrix erzeugt anschließend aus dem Luminanzsignal Y und dem Farbdifferenzsignal R-Y und B-Y wieder die Farbwertsignale R, G und B.
Nach Entzerrung der nichtlinearen Schreiblampen- und Filmkennlinien, wie bereits in der Figur 10 dargestellt ist, wird das
Signal über drei Filter auf einem Farbfotomaterial aufbelichtet.
Wie bereits bei Figur 10 erläutert, kann dieser Empfänger sowohl
für die direkte Aufzeichnung des übertragenden Bildes, als aber
auch dazu benutzt werden, um aus dem codierten Farbbild, das auf
Schwarz-Weiß-Fotomaterial aufgezeichnet ist, wieder ein reelles
Farbfoto zu erzeugen. Dazu wird das codierte Bild in einer sogenannten Überspieleinrichtung schraubenlinienförmig abgetastet.
Das Bild ist so aufgespannt, daß nacheinander zuerst ein komprimiertes Farbdifferenzsignal, dann der Schwarzauszug und dann das
zweite komprimierte Farbdifferenzsignal abgetastet. Das Ausgangssignal des Fotosenders wird dann vor dem Demultiplexer des Farb-
telebildempfängers eingespeist. Der weitere Signalablauf ist der
gleiche wie bei der direkten Übertragung vom Sender über den
Übertragungskanal und dem Demodulator. Anstelle dieses Trommelaufzeichnungsgerätes kann selbstverständlich ein handelsüblicher
Farbfernsehmonitor verwendet werden, da die R, G, B-Werte aus der
Dematrix geliefert werden.

Dr.-Ing. Rudolf Hell GmbH                Kiel, den 11. November 1980
Grenzstraße 1-5                          Lf/Uck
2300 Kiel 14


Patentanmeldung Nr. 80/550
Kennwort: "Farbfax"


<u>Patentansprüche</u>


1.  Verfahren zum Übertragen von Farbbildern in der Faksimiletechnik, wobei das Farboriginal mittels eines optisch-
    elektrischen Abtasters über Farbfilter trichromatisch
    abgetastet wird und Farbwertsignalwerte R, G, B gewonnen
    werden, <u>dadurch gekennzeichnet,</u>

    daß aus den Farbwertsignalen R, G, B ein Luminanzsignal Y
    gemäß der Formel $Y=a_1R+a_2G+a_3B$ und zwei Farbdifferenz-
    signale R-Y und B-Y gebildet werden,

    daß die Farbdifferenzsignale R-Y und B-Y komprimiert werden, daß die komprimierten Farbdifferenzsignale R-Y, B-Y und das
    Luminanzsignal derart zeitlich verschachtelt übertragen
    werden, daß die Farbdifferenzsignale in der Totzeit des
    Abtasters übertragen werden und

    daß am Empfangsort nach der Dekompression und der Multiplexierung das Farbbild wieder aufgezeichnet wird.


2.  Verfahren zum Übertragen von Farbbildern in der Faksimiletechnik, wobei das Farboriginal mittels einer optischelektrischen Abtasteinrichtung über Farbfilter trichromatisch

- 2 -

abgetastet wird und Farbwertsignale R, G, B gewonnen werden, dadurch gekennzeichnet,

daß aus den Farbwertsignalen R, G, B ein Luminanzsignal Y gemäß der Formel $Y=a_1R+a_2G+a_3B$ und zwei Farbdifferenzsignale R-Y und B-Y gebildet werden,

daß die Farbdifferenzsignale R-Y und B-Y komprimiert werden, daß die komprimierten Farbdifferenzsignale R-Y, B-Y und das Luminanzsignal Y derart zeitlich verschachtelt übertragen werden, daß die Farbdifferenzsignale in der Totzeit des Abtasters übertragen werden,

daß am Empfangsort die übertragenen Signale in codierter Form derart aufgezeichnet werden, daß das Luminanzsignal als Schwarz-Weiß-Bild und die Farbdifferenzsignale R-Y und B-Y an den Seiten des Schwarz-Weiß-Bildes in komprimierter Form wieder aufgezeichnet werden und

daß das gemäß dem vorangehenden Merkmal aufgezeichnete Schwarz-Weiß-Bild optischelektrisch zeilenweise abgetastet und daß das Farbbild entweder nach Dekompression der Farbdifferenzsignale und Demultiplexierung auf einen Farbmonitor oder auf Farbfilm wieder aufgezeichnet werden.


3.  Verfahren nach Anspruch 1 oder 2, dadurch gekennzeichnet, daß die Übertragung der Farbdifferenzsignale R-Y und B-Y zeilenalternierend in der Einspannlücke des Originals erfolgt.

4. Verfahren nach Anspruch 1 oder 2, <u>dadurch gekennzeichnet,</u>
daß die Übertragung der Farbdifferenzsignale zeilensequentiell
erfolgt.

5. Farbfaksimilesender zur Durchführung des Verfahrens nach
Anspruch 1 mit einem punkt- und zeilenweise abtastenden
Farbabtaster für die Farboriginale, einer dem Farbabtaster
nachgeschalteten Matrizierungseinrichtung zur Umsetzung der
Farbmeßwertsignale R, G, B in Luminanz-Signale Y nach der
Formel $Y=a_1R+a_2G+a_3B$ und in Farbdifferenzsignale R-Y und
B-Y, wobei die Matrizierungseinrichtung so ausgebildet ist,
daß sie diese Formel nachbildet, <u>dadurch gekennzeichnet,</u>
daß an den Ausgängen der Matrixschaltung 8, an denen die
Farbdifferenzsignale R-Y und B-Y anliegen, ein Umschalter 9
angeschlossen ist, durch den die Farbdifferenzsignale alternierend auf einen Tiefpaßfilter 10 mit nachgeschaltetem
Analog-Digital-Wandler 11 und auf eine Kompressionsschaltung,
die aus einem Zeilenspeicher 12 und aus einem mit dem
Speicher verbundenen Adreßzähler 13 besteht, gegeben werden,
wobei das Auslesen aus dem Zeilenspeicher mit schnellerer
Frequenz erfolgt als das Einlesen und daß am Ausgang des
Zeilenspeichers 12 ein Digital-Analog-Wandler 16 angeschlossen
ist, der mit einem Eingang eines Umschalters 17 verbunden ist,
dessen anderer Eingang mit dem Ausgang der Matrixschaltung 8
verbunden ist, der das Luminanzsignal Y abgibt und daß der

- 4 -

Ausgang des Umschalters über einen weiteren Tiefpaß 19 mit einem Modulator 20 an dem Telefoniekanal angeschlossen ist.

6. Einrichtung nach Anspruch 5, dadurch gekennzeichnet, daß am Ausgang des Zeilenspeichers ein weiterer Umschalter 14 in den Signalweg eingeschaltet ist, mit dem ein konstanter digitaler Grauwert, der von einer Konstantspannungsquelle 15 geliefert wird, eintastbar ist.

7. Faksimileempfänger zur Durchführung des Verfahrens nach Anspruch 1 mit einem Demodulator am Eingang, der an den Telefoniekanal angeschlossen ist und mit einer Faksimileaufzeichnungseinheit, dadurch gekennzeichnet, daß an den Modulator ein Tiefpaßfilter angeschlossen ist, der über einen A/D-Wandler 27 mit einer Kompressionseinrichtung 28 verbunden ist, die aus einem Zeilenspeicher 29 mit zugeordnetem Adreß-, Lese- und Schreibzähler 43 und 44 verbunden ist, wobei die Auslesefrequenz aus dem Speicher größer ist als die Einlesefrequenz,
daß an den Ausgang des Zeilenspeichers 29 jeweils ein weiterer Zeilenspeicher 30 bzw. 30' für das Farbdifferenzsignal R-Y und das Farbdifferenzsignal B-Y angeschlossen ist und den Zeilenspeichern jeweils ein Adreßzähler 31 und 31' zugeordnet ist, durch die das alternierende Einschreiben der Farbdifferenzsignale R-Y und B-Y in die Zeilenspeicher 30 bzw. 31' erfolgt, daß den Zeilenspeichern 30 und 30' ein Dreifach-Multiplexer 32
nachgeschaltet ist, dessen dritter Eingang mit dem Ausgang des
Zeilenspeichers 29 verbunden ist und dessen Ausgang an eine
Schwarz-Weiß-Faksimileaufzeichnungseinheit angeschlossen ist,
wobei eine Steuerung des Multiplexers 32 von einer Impulserzeugungsstufe 42 derart erfolgt, daß der Faksimileaufzeichnungseinheit innerhalb einer Zeile das Luminanzsignal als
Schwarz-Weißauszug und die beiden Farbdifferenzsignale R-Y
und B-Y in komprimierter Form angeboten werden, wodurch auf
dem Schwarz-Weiß-Aufzeichnungsmedium 39 der Schwarz-Weißauszug
und an den Seiten des Schwarz-Weißauszuges die komprimierten
Farbdifferenzsignale R-Y und B-Y aufgezeichnet werden.

8. Anordnung zur Durchführung des Verfahrens nach Anspruch 1 oder
   2 zur Aufzeichnung von Farbbildern, die in komprimierter Form
   als Schwarz-Weiß-Bilder aufgezeichnet worden sind oder vom
   Sender über einen Telefoniekanal empfangen werden, dadurch
   gekennzeichnet,
   daß eine das Schwarz-Weiß-Bild punkt- und zeilenweise abtastende
   Abtasteinheit vorgesehen ist, die an einem Eingang eines
   Umschalters angeschlossen ist, dessen anderer Eingang über
   einen Demodulator mit der Übertragungsstrecke verbunden ist,
   daß der Ausgang des Umschalters über einen Tiefpaß 66 an einen
   A/D-Wandler 68 angeschlossen ist, dessen Ausgang mit drei
   Zeilenspeichern 69, 70 und 71 verbunden ist, die jeweils für die Luminanz Y und die beiden Farbdifferenzsignale R-Y und B-Y vorgesehen sind, wobei dem Zeilenspeicher 69 für die Luminanz Y ein Zeilenzähler 69' und den Zeilenzählern 70 und 71 ein weiterer Adressenzähler 73 zugeordnet sind, deren Steuerung von einer Impulserzeugungsstufe 71 so vorgenommen werden, daß die aus dem vom A/D-Wandler 60 ankommenden verschachtelten Signalfolgen sortiert werden, daß die Signalanteile jeweils den entsprechenden Zeilenspeichern zugeführt werden,

daß an die Ausgänge der Zeilenspeicher 69, 70 und 71 Digital-Analog-Wandler 74, 75 und 80 angeschlossen sind, deren Ausgänge über Tiefpässe 77, 78 und 79 an eine Dematrix angeschlossen sind, die aus den Chrominanz-Luminanz-Signalen R-Y, B-Y und Y wieder die Farbmeßwertsignale R, G und B bildet und daß an die Dematrix über drei Entzerrerstufen 80, 81 und 82 eine Farbaufzeichnungseinheit 84 bis 91 angeschlossen ist.


9. Anordnung nach Anspruch 8, dadurch gekennzeichnet, daß die Farbaufzeichnungseinheit eine Farbfaksimileaufzeichnungseinheit mit rotierender Trommel 91 ist.


10. Anordnung nach Anspruch 8, dadurch gekennzeichnet, daß die Farbaufzeichnungseinheit ein Farbfernsehmonitor ist.


11. Farbfaksimilesender zur Durchführung des Verfahrens nach Anspruch 1 mit einem punkt- und zeilenweise abtastenden Farb-

- 7 -

abtasters für das Farboriginal, einer dem Farbabtaster
nachgeschalteten Matriziereinrichtung zur Umsetzung der Farbmeßwertsignale R, G, B in ein Luminanzsignal Y nach der Formel
$Y=a_1R+a_2G+a_3B$ und in Farbdifferenzsignale R-Y und B-Y
umwandelt, wobei die Schaltung diese Formeln nachbildet,
dadurch gekennzeichnet, daß im Ausgang der Matrixschaltung 8
in dem Signal der Farbdifferenzsignale R-Y, B-Y jeweils ein
Tießpaß 50, 51 mit nachgeschalteten A/D-Wandlern 52 und 53
vorgesehen sind, deren Ausgänge jeweils am Zeilenspeicher
für die Farbdifferenzsignale R-Y und B-Y angeschlossen sind,
denen ein Adreßzähler 56 zugeordnet ist,
daß an dem Luminanzausgang der Matrix 8 ein Verzögerungsglied $\curlyvee$ angeschlossen ist,
daß die Ausgänge der Zeilenspeicher 54 und 55 auf einen
Vierfach-Multiplexer 57 gegeben werden, dessen zwei weitere
Eingänge jeweils mit einem digitalen Weißwertgeber 58 und
einem digitalen Grauwertgeber 59 verbunden sind,
daß an dem Ausgang des Multiplexers 57 ein D/A-Wandler 60
angeschlossen ist, dessen Ausgang sowie der Ausgang der
Verzögerungsstufe $\gamma$ mit zwei Eingängen eines Umschalters 61
verbunden sind, wobei die Steuerung der Zeilenspeicher 54
und 55, des Adreßzählers 56 sowie des Multiplexers 57 und
des Umschalters 61 von einer Impulserzeugungsstufe 70 derart
erfolgt, daß am Ausgang des Umschalters 61 eine zeilenserielle Folge von Farbdifferenzsignalen B-Y, Luminanz-

signal Y und Farbdifferenzsignal R-Y auftritt, wobei die
Farbdifferenzsignale jeweils in den Einspannlücken des
Originals liegen und

daß der Ausgang des Umschalters über einen Tiefpaß 62 und
einen Modulator 63 mit dem Telefoniekanal verbunden ist.

Fig. 1

00521 84

Fig. 2

| FG₅ | FG₈ | Ausgang Mux |
|---|---|---|
| 0 | 0 | (R-Y) direkt |
| 0 | 1 | (R Y) verzögert |
| 1 | 0 | (B-Y) $\tau_1 ; \tau_2$ |
| 1 | 1 | (Y) direkt |

Fig. 5

*Fig. 3*

3/12

0052184

Fig. 4a

Fig.4b

Fig. 6

zum Kanal

*Fig. 7*

Walzenumfang

Bildzeile

Einspannlücke

B-Y

Y-Zeile

R-Y

Grauwert
für
Klemmung

Weißwert zur
Synchronisation

*Fig. 7a*

$f_Z$

$FG_1$

$FG_2$

$M_1$

$M_2$

$M_3$

RS

*Fig. 8*

| $M_1$ | $M_2$ | Ausg. Mux |
|-------|-------|-----------|
| 0 | 0 | B-Y |
| 0 | 1 | R-Y |
| 1 | 0 | Klg (Grauwert) |
| 1 | 1 | W (Weißwert) |

*Fig. 9*

Fig. 10

9/12

0052184

*Fig. 11*

*Fig. 12*

Fig. 13

Fig. 14

Fig. 15

Fig. 16